**Europäisches Patentamt**

**European Patent Office**

**Office européen des brevets**

(19)

(11) Numéro de publication : **0 179 726 B1**

(12) **FASCICULE DE BREVET EUROPÉEN**

(45) Date de publication du fascicule du brevet :
**30.11.88**

(51) Int. Cl.⁴ : **A 01 K 89/01**

(21) Numéro de dépôt : **85420186.0**

(22) Date de dépôt : **22.10.85**

(54) **Bobine démontable pour moulinet de canne à peche.**

(30) Priorité : **24.10.84 FR 8416615**

(43) Date de publication de la demande :
**30.04.86 Bulletin 86/18**

(45) Mention de la délivrance du brevet :
**30.11.88 Bulletin 88/48**

(84) Etats contractants désignés :
**BE DE FR GB IT SE**

(56) Documents cités :
**FR-A- 1 239 872**
**US-A- 4 327 880**

(73) Titulaire : **MITCHELL SPORTS**
**Av des Sorbiers Thyez**
**F-74300 Cluses (FR)**

(72) Inventeur : **Ruin, Jean**
**Av Louis Coppel Thyez**
**F-74300 Cluses (FR)**

(74) Mandataire : **de Beaumont, Michel**
**Cabinet Poncet 7, chemin de Tillier B.P. 317**
**F-74008 Annecy Cédex (FR)**

Jouve, 18, rue St-Denis, 75001 Paris, France

## Description

La présente invention concerne les moulinets pour canne à pêche, dont la réserve de fil, appelée « bobine » ou « tambour », est une pièce sensiblement de révolution constituée de deux flasques étendus radialement et réunis par un moyeu cylindrique s'étendant axialement d'un flasque à l'autre.

Un même moulinet peut admettre successivement plusieurs bobines, chaque bobine supportant par exemple un fil de diamètre différent. Pour cela, les bobines modernes sont rendues amovibles et interchangeables par un dispositif de démontage rapide comprenant généralement une structure telle qu'un alésage destiné à s'engager sur un axe support solidaire du moulinet ; des moyens de verrouillage permettent de solidariser en translation et en rotation la bobine sur l'axe ; des moyens intérieurs de démontage permettent de désolidariser la bobine de l'axe ; les moyens de démontage les plus récents sont actionnés de préférence par pression sur un poussoir accessible sur la face antérieure de la bobine, c'est-à-dire sur la face antérieure du flasque situé à l'opposé de l'axe support du moulinet.

Dans un mécanisme connu, décrit dans le brevet US-2 865 662 et qui comprend les caractéristiques du préambule de la revendication 1, l'extrémité de l'axe support comporte une gorge périphérique dans laquelle s'engage une clavette élastique solidaire de la bobine. Le poussoir axial comporte une extrémité conique qui, lors de son enfoncement, s'engage entre les branches de la clavette et provoque son écartement.

En utilisation normale, la canne à pêche est tenue par l'utilisateur dans une position dans laquelle la face avant de la bobine est dirigée vers le haut ; l'eau de pluie tend alors à pénétrer dans l'alésage de la bobine autour du poussoir, et dans le mécanisme interne du moulinet. Cela nécessite de réaliser le mécanisme interne à l'aide d'éléments particulièrement insensibles à la corrosion, et l'humidité produit de toutes manières une baisse sensible d'efficacité du mécanisme.

Par ailleurs, les moyens intérieurs de démontage doivent être facilement actionnables par l'utilisateur ; pour cela, le poussoir doit être facilement atteint par un doigt de l'utilisateur, par exemple en le rendant proéminent sur la face avant de la bobine.

Toutefois, il est apparu que cette exigence de caractère ergonomique est difficilement compatible avec la fiabilité d'utilisation du dispositif ; en effet, les demandeurs ont constaté que, notamment pour les moulinets de type à bobine fixe, l'enroulement du fil tend à présenter des discontinuités, notamment par le fait que le fil tend à s'enrouler autour du poussoir, ou à adhérer momentanément à l'une des parties de la face antérieure de la bobine.

La présente invention a notamment pour objet d'éviter les inconvénients des moulinets connus en proposant une nouvelle structure de bobine à dispositif de démontage rapide actionné par la face antérieure de la bobine, structure dans laquelle la face antérieure est régulière et ne comporte aucune aspérité susceptible d'accrocher le fil, tout en étant cependant facilement accessible pour la manœuvre du dispositif de démontage, cette face antérieure de la bobine étant rendue totalement étanche, et la bobine constituant alors un élément de protection efficace évitant le ruissellement de l'eau le long de l'axe support du moulinet. Les caractéristiques de l'invention font l'objet de la partie caractérisante de la revendication 1.

Selon un autre objet de la présente invention, la nouvelle structure de bobine est obtenue par une modification particulièrement simple d'une structure connue de bobine, la modification consistant dans l'adaptation d'une seule pièce supplémentaire, une membrane flexible, sur la structure connue. La structure connue est réalisée par moulage d'une matière plastique. Selon l'invention il est ainsi possible de mettre en œuvre la nouvelle structure sans modification sensible des moules, et d'utiliser les mêmes moules pour la production des bobines de structure connue et des bobines de structure nouvelle.

En particulier l'invention s'applique pour réaliser ou modifier des bobines comportant un poussoir proéminent, en rendant la face antérieure de bobine à la fois étanche et sans aspérité.

Selon un autre objet de l'invention, la face antérieure de la bobine présente une certaine élasticité qui permet de simplifier le mécanisme interne de démontage.

Selon un autre objet de l'invention, le flasque antérieur de la bobine comporte une surface annulaire périphérique présentant un coefficient de frottement particulièrement faible permettant un bon glissement du fil, cette surface étant en outre d'une dureté suffisante pour empêcher sa détérioration en cours d'utilisation, la détérioration de l'état de surface risquant de provoquer le freinage du fil.

Pour atteindre ces objets ainsi que d'autres, la face antérieure de la bobine comprend une membrane flexible imperméable dont le bord est solidarisé de manière étanche au pourtour annulaire rigide du flasque antérieur de bobine et dont la face intérieure porte contre un poussoir qui actionne les moyens intérieurs de démontage.

Selon une autre caractéristique de l'invention, la membrane est réalisée en une matière élastique, et sa face antérieure a une forme convexe légèrement proéminente et régulièrement arrondie, qui constitue une surface lisse et sans aspérités, sur laquelle le fil ne peut avoir aucune prise, et qui est aisément accessible par l'utilisateur pour le démontage.

Selon une autre caractéristique de l'invention, la membrane élastique est conformée de façon que son élasticité contribue au rappel du poussoir dans une position de repos dans laquelle il est écarté des moyens intérieurs de débrayage.

Selon une autre caractéristique de l'invention, la membrane est sertie à sa périphérie par un anneau rapporté sur le corps de bobine et formant le pourtour annulaire de la face avant de bobine, l'anneau rapporté réalisant simultanément une surface anti-frottements pour le fil, cette surface étant particulièrement résistante à l'usure.

D'autres objets, caractéristiques et avantages de la présente invention, ressortiront de la description suivante de modes de réalisation particuliers, faite en relation avec les figures jointes, parmi lesquelles :

- la figure 1 représente une vue générale d'un moulinet selon la présente invention ;
- la figure 2 représente une vue en coupe longitudinale d'une bobine de moulinet connue ;
- la figure 3 représente une vue en coupe longitudinale d'une bobine selon la présente invention dans un premier mode de réalisation ; et - la figure 4 représente un second mode de réalisation de la bobine.

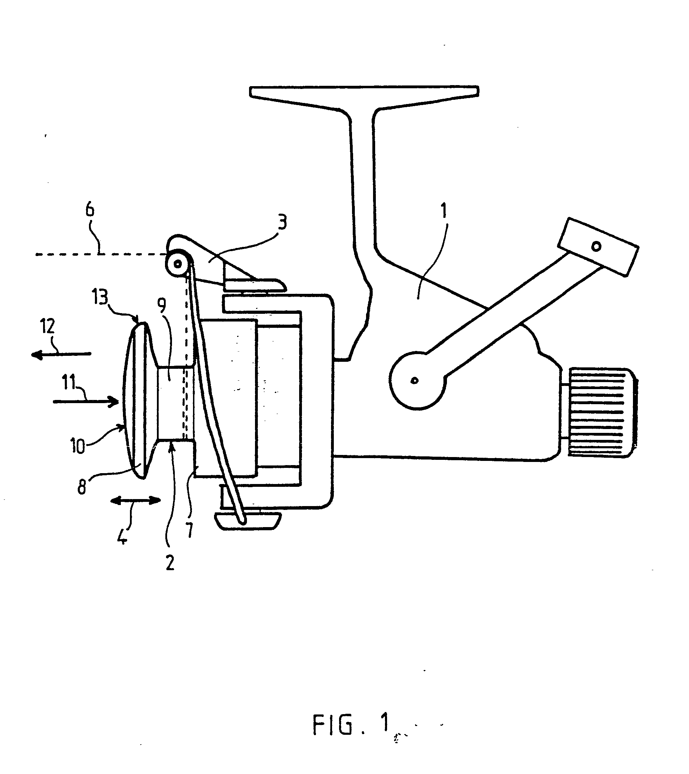

La présente invention s'applique particulièrement aux moulinets de pêche du type à bobine fixe. Un tel moulinet est représenté sur la figure 1. Il comprend de manière générale un corps 1 contenant un mécanisme interne pour l'entraînement et la commande d'une bobine 2 et d'un enrouleur de fil 3.

Dans les moulinets de type à bobine fixe, la bobine 2 est montée sur un axe support solidaire du moulinet. L'axe support est actionné par le mécanisme interne du corps 1 selon un mouvement de translation alternatif longitudinal figuré par les doubles flèches 4 assurant la répartition du fil 6 lors de son enroulement par l'enrouleur 3.

La bobine 2 comprend deux flasques 7 et 8 étendus radialement et réunis par un moyeu cylindrique 9 s'étendant axialement d'un flasque à l'autre. L'axe de la bobine est approximativement parallèle au sens de déroulement du fil 6. Dans le mode de réalisation représenté, le flasque antérieur 8, ou flasque disposé à l'opposé du corps 1 de moulinet, comporte une face antérieure 10 de forme convexe, légèrement proéminente, et régulièrement arrondie, comme le représente la figure 1. Par exemple, la face antérieure 10 comporte une partie centrale en forme de calotte sphérique, se raccordant de manière tangentielle à une surface torique constituant la surface périphérique 13 du flasque antérieur. La face antérieure 10 constitue une surface lisse et sans aspérités, sur laquelle le fil 6 ne peut avoir aucune prise. Ainsi, en début d'enroulement du fil 6, le fil s'enroule obligatoirement sur le moyeu 9 de la bobine 2, sans possibilité d'accrochage sur la face antérieure 10.

Simultanément, cette face antérieure 10 proéminente est aisément accessible par l'utilisateur qui, par pression dans le sens représenté par la flèche 11, assure le débrayage de la bobine 2 ; après débrayage, la bobine est désolidarisée de son axe support et peut être enlevée du moulinet par une traction dans le sens de la flèche 12.

Lors d'un lancer, l'enrouleur de fil 3 est escamoté, et le fil 6 se déroule directement hors du moyeu 9 en venant frotter contre la surface extérieure périphérique 13 du flasque antérieur 8. Selon un mode de réalisation de l'invention, cette surface extérieure 13 est réalisée au moyen d'un anneau rapporté, par exemple en métal ou autre matière, dont la surface extérieure est dure et lisse. Le fil 6 peut glisser pratiquement sans frottements sur cette surface extérieure 13 qui, du fait de la dureté de la matière, résiste à l'usure et à la dégradation éventuelle sous l'effet de chocs en cours d'utilisation.

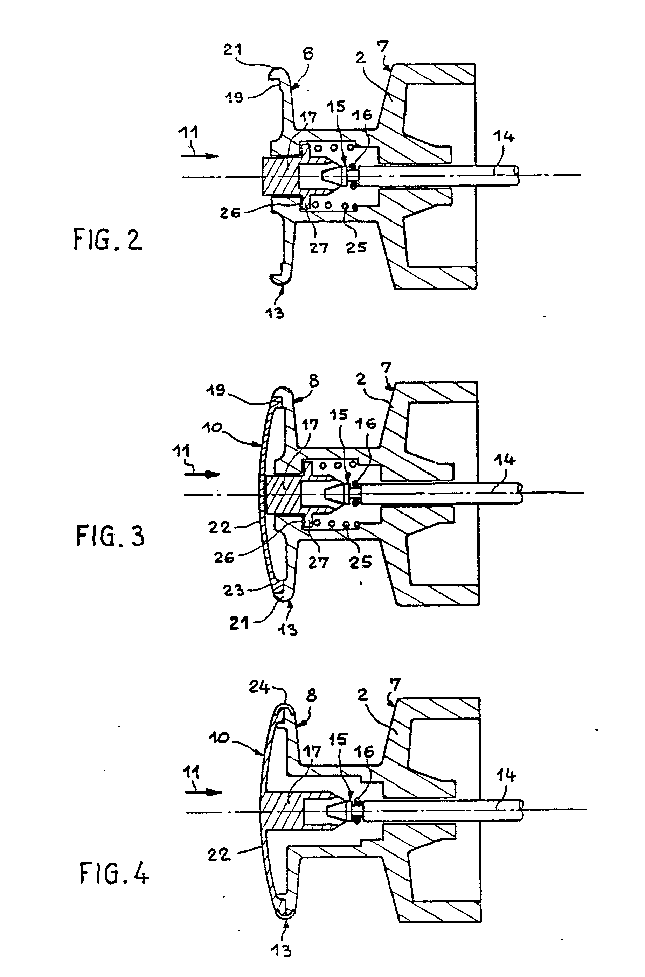

La figure 2 illustre une réalisation connue de la structure interne de la bobine. La bobine 2 amovible est rapportée sur l'axe support 14. Comme dans le dispositif connu du brevet US-2 865 662, l'extrémité de l'axe 14 comporte une gorge périphérique 15 dans laquelle s'engage une clavette 16 élastique solidaire de la bobine 2. Des moyens intérieurs de démontage permettent d'écarter la clavette 16, provoquant son désengagement de la gorge 15 et le déverrouillage de la bobine 2. Le déverrouillage est assuré au moyen d'un poussoir axial 17 proéminent qui, lors d'un enfoncement dans le sens de la flèche 11, comporte une extrémité conique qui s'engage entre les branches de la clavette 16 et provoque son écartement.

Selon l'invention, comme le représentent les figures 3 et 4, le poussoir 17 est recouvert par une membrane antérieure flexible et imperméable 22 dont le bord 23 est solidarisé de manière étanche au pourtour annulaire rigide 21 du flasque antérieur 8 de bobine, la membrane 22 et le pourtour annulaire 21 formant la surface antérieure 10 de bobine. La face intérieure de la membrane 22 est en appui contre le poussoir 17. La membrane est réalisée de préférence en une matière élastique telle qu'un élastomère. On peut par exemple solidariser le bord 23 de la membrane 22 par collage sur un méplat 19 du flasque, comme le représente la figure 3.

Une autre possibilité consiste à solidariser le bord 23 de la membrane 22 par sertissage sur le bord du flasque antérieur 8 : la figure 4 représente un tel mode d'assemblage dans lequel un anneau métallique 24 est rapporté sur le bord périphérique du flasque antérieur 8 et assure simultanément le sertissage de la membrane 22 et la réalisation de la surface 13 anti-frottements et anti-usure pour le fil 6.

Le mode de réalisation de la figure 3 constitue une modification simple et peu onéreuse de la bobine connue de la figure 2. Le poussoir 17 est sollicité vers l'avant par un ressort 25 provoquant l'écartement du poussoir 17 par rapport à la clavette 16. Des butées 26 et 27 limitent la course du poussoir 17 et évitent son éjection sous l'action du ressort 25. Pour effectuer le déverrouillage, l'utilisateur doit déplacer le poussoir 17 à l'encontre du ressort 25 qui le ramène ensuite en position de repos représentée sur les figures. La modification selon l'invention consiste à recouvrir la partie centrale de face antérieure de bobine par la membrane 22, qui permet l'actionnement du poussoir 17 tout en assurant l'étanchéité de la face antérieure et en définissant une surface extérieure régulière et lissée sur laquelle le fil à pêche n'a pas de prise. On choisit une membrane 22 élastique suffisamment raide pour que le fil à pêche ne risque pas de la déformer, et de s'enrouler autour du poussoir 17 malgré sa présence. Le choix des matériaux et dimensions pour réaliser une telle membrane est à la portée de l'homme du métier.

Dans le mode de réalisation de la figure 4, le poussoir 17 est rendu solidaire de la membrane 22. La membrane 22 est réalisée en une matière élastique conformée pour participer elle-même au rappel du poussoir 17 en position de repos représentée sur les figures. En choisissant une membrane de raideur suffisante, on peut supprimer le ressort 25, ainsi qu'éventuellement les butées 26 et 27 des modes de réalisation précédents.

La présente invention s'applique également à la réalisation de bobines dont la surface antérieure est plane ou concave, ainsi qu'à des modifications de bobines connues dont la face antérieure a une forme différente de celle représentée sur la figure 2.

La présente invention n'est pas limitée aux modes de réalisation qui ont été explicitement décrits, mais elle en inclut les diverses variantes et généralisations contenues dans le domaine des revendications ci-après.

**Revendications**

1. Bobine (2) démontable pour moulinet de canne à pêche, comprenant un moyeu axial (9) réunissant un flasque radial antérieur (8) et un flasque radial postérieur (7), ledit flasque antérieur (8) comprenant un pourtour annulaire rigide (21) et un méplat annulaire (19), la bobine comprenant une face antérieure (10) et une structure destinée à s'engager sur un axe support (14) solidaire du moulinet, des moyens de verrouillage (16) pour solidariser en translation et en rotation la bobine (2) sur l'axe support (14), et des moyens intérieurs de démontage pour déverrouiller la bobine et la désolidariser de l'axe support par pression sur un poussoir (17) accessible sur la face antérieure (10) de la bobine, caractérisée en ce que la face antérieure (10) est formée d'une part par le pourtour annulaire rigide (21) du flasque antérieur (8) de bobine, et d'autre part par une membrane flexible imperméable (22) dont le bord (23) est solidarisé de manière étanche au pourtour annulaire rigide (21) du flasque et dont la face intérieure porte contre le poussoir (17) qui actionne les moyens intérieurs de démontage.

2. Bobine selon la revendication 1, caractérisée en ce que la membrane est réalisée en une matière élastique et en ce que sa face antérieure (10) a une forme convexe légèrement proéminente et régulièrement arrondie, de sorte que la membrane constitue une surface lisse et sans aspérités sur laquelle le fil (6) ne peut avoir aucune prise et qui est aisément accessible par l'utilisateur pour le démontage.

3. Bobine selon la revendication 1, caractérisée en ce que ladite face intérieure est solidaire du poussoir (17).

4. Bobine selon la revendication 3, caractérisée en ce que la membrane (22) élastique est conformée de manière que son élasticité contribue au rappel du poussoir dans une position de repos dans laquelle il est écarté des moyens intérieurs de verrouillage (16).

5. Bobine selon l'une quelconque des revendications 1 à 4, caractérisée en ce que la membrane (22) est collée selon sa périphérie sur le flasque antérieur (8) de bobine.

6. Bobine selon l'une quelconque des revendications 1 à 5, caractérisée en ce que la surface extérieure périphérique du flasque antérieur (8) est formée par un anneau (24) rapporté, dont la surface extérieure est dure et lisse.

7. Bobine selon la revendication 6, dans son rattachement à l'une quelconque des revendications 1 à 4, caractérisée en ce que la membrane (22) est sertie selon sa périphérie par l'anneau (24) rapporté sur le flasque (8) et formant le pourtour annulaire du flasque, l'anneau rapporté réalisant simultanément la surface anti-frottements pour le fil et la surface anti-usure du flasque.

8. Moulinet de canne à pêche, caractérisé en ce qu'il comprend une bobine (2) selon l'une quelconque des revendications 1 à 7.

**Claims**

1. Removable spool (2) for a fishing rod reel, comprising an axial hub (9) joining a radial front flange (8) and a radial rear flange (7), the said front flange (8) comprising a rigid annular rim (21) and an annular flat (19), the spool comprising a front surface (10) and a structure intended to be engaged on a supporting spindle (14) integral with the reel, locking means (16) for securing the spool (2) in rotation and translation on the supporting spindle (14) and internal freeing means for unlocking the spool and releasing it from the supporting spindle by pressure on a push-button (17) accessible on the front surface (10) of the spool, characterised in that the front surface (10) is formed on the one hand by the rigid annular rim (21) of the front flange (8) of the spool and on the other hand by a flexible impermeable diaphragm (22) the edge (23) of which is sealingly attached to the rigid annular rim (21) of the flange and the inner surface of which bears against the push-button (17) which actuates the internal freeing means.

2. Spool according to claim 1, characterised in that the diaphragm is produced from a resilient material and in that its front surface (10) has a slightly protruding convex surface of uniform curvature, so that the diaphragm forms a smooth surface without roughnesses on which the line (6) cannot find any purchase and which is easily accessible by the user for removal.

3. Spool according to claim 1, characterised in that the said internal surface is integral with the push-button (17).

4. Spool according to claim 3, characterised in that the resilient diaphragm (22) is so shaped that its resilience contributes to the return of the push-button into an idle position in which it is spaced apart from the internal locking means (16).

5. Spool according to any one of claims 1 to 4, characterised in that the diaphragm (22) is adhered along its periphery on the front spool flange (8).

6. Spool according to any one of claims 1 to 5, characterised in that the external peripheral surface of the front flange (8) is formed by a fitted-on ring (24) the external surface of which is hard and smooth.

7. Spool according to claim 6, when dependent on any one of claims 1 to 4, characterised in that the diaphragm (22) is set along its periphery by means of the ring (24) fitted to the flange (8) and forming the annular circumference of the flange, the fitted-on ring providing simultaneously the anti-friction surface for the line and the anti-attrition surface of the flange.

8. Reel for a fishing rod, characterised in that it comprises a spool (2) according to any one of the claims 1 to 7.

**Patentansprüche**

1. Zerlegbare Spule (2) für eine Angelrolle, die aufweist eine axiale Nabe (9) vereinigend einen vorne befindlichen radialen Flansch (8) und einen hinten befindlichen radialen Flansch (7), wobei der vorne befindliche Flansch (8) einen starren, ringförmigen Umfang (21) und eine ringförmige Anflachung (19) aufweist und die Spule aufweist eine Vorderseite (10), eine Struktur, die dafür vorgesehen ist, an einer Trägerachse (14) einzugreifen, die fest mit der Rolle verbunden ist, eine Verriegelungseinrichtung (16) zum Befestigen der Spule (2) an der Trägerachse (14) bei einer Translation und einer Rotation, und innen befindliche Mittel zum Zerlegen, um die Spule zu entriegeln und zu trennen von der Trägerachse durch einen Druck auf einen Knopf (17), der über die Vorderseite (10) der Spule zugänglich ist, dadurch gekennzeichnet, daß die Vorderseite (10) einerseits durch den starren ringförmigen Umfang (21) des vorne befindlichen Flansches (8) der Spule und andererseits durch eine flexible, undurchlässige Membran (22) gebildet ist, deren Kante (23) wasserdicht mit dem ringförmigen starren Umfang (21) des Flansches verbunden ist und deren innenliegende Seite sich gegen den Knopf (17) lehnt, der die innenliegenden Mittel zur Zerlegung betätigt.

2. Spule nach Anspruch 1, dadurch gekennzeichnet, daß die Membran aus einem elastischen Material besteht und daß ihre Vorderseite (10) eine konvexe, leicht hervorspringende und regelmäßig abgerundete Form hat, von der Art, daß die Membran eine glatte Oberfläche ohne Unebenheiten bildet, auf welcher der Faden (6) keinen Halt finden kann und die leicht zugänglich für den Bediener zum Zerlegen ist.

3. Spule nach Anspruch 1, dadurch gekennzeichnet, daß die besagte innen befindliche Seite mit dem Knopf (17) verbunden ist.

4. Spule nach Anspruch 3, dadurch gekennzeichnet, daß die elastische Membrane (22) in der Art ausgestaltet ist, daß ihre Elastizität zu einer Rückwärtsbewegung des Knopfes in eine Ruheposition beiträgt, in der er von den innen befindlichen Mitteln zur Verriegelung (16) entfernt ist.

5. Spule nach einem der Ansprüche 1 bis 4, dadurch gekennzeichnet, daß die Membran (22) entlang ihrem Rand auf dem vorne liegenden Flansch (8) der Spule geklebt ist.

6. Spule nach einem der Ansprüche 1 bis 5, dadurch gekennzeichnet, daß die äußere Randoberfläche des vorne liegenden Flansches (8) aus einem angefügten Ring (24) gebildet ist, dessen äußere Oberfläche hart und glatt ist.

7. Spule nach Anspruch 6, der sich auf einen der Ansprüche 1 bis 4 rückbezieht, dadurch gekennzeichnet, daß die Membran (22) entlang ihres Randes durch einen Ring (24) eingefaßt ist, der an dem Flansch (8) angefügt ist und den ringförmigen Umfang des Flansches bildet, wobei der angefügte Ring gleichzeitig die für den Faden nicht reibende Oberfläche und die nicht verschleißende Oberfläche des Flansches bildet.

8. Rolle für eine Angel zum Fischen, dadurch gekennzeichnet, daß sie eine Spule (2) nach einem der Ansprüche 1 bis 7 aufweist.

FIG. 1

FIG. 2

FIG. 3

FIG. 4